# EUROPEAN PATENT APPLICATION

(11) **EP 0 883 000 A1**
(43) Date of publication of application: **09.12.1998**
(21) Application number: 97201646.3
(22) Date of filing: 02.06.1997
(51) Int. Cl.: G02B 6/00, G02B 6/12

(54) **Optical planar waveguide structure comprising of a stray light capture region and method of manufacture of the same**

(71) Applicant: Akzo Nobel N.V., 6824 BM Arnhem (NL)
(72) Inventor: Hoekstra, Tsjerk Hans, 6951 LZ Dieren (NL)
(74) Representative: Schalkwijk, Pieter Cornelis

(57) **Abstract**

The invention pertains to an optical planar waveguide structure comprising at least one waveguide channel and at least one region for the capture of stray light that has leaked from waveguide channel, wherein the side of the capture region next to the waveguide channel comprises one or more facets for coupling the stray light into the lossy region. Thus, the capture effectiveness is greatly improved and any detrimental consequences of the said stray light are avoided.

## Description

The invention pertains to an optical planar waveguide structure comprising at least one waveguide channel and at least one region for the capture of stray light that has leaked from the waveguide channel.

Such an optical planar waveguide structure is known from H.P. Nolting et al., 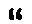 Architecture of Crosstalk-Reduced Digital Optical 2x2 Switch (CRDOS), 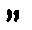 IEEE Photonics Technology Letters, Vol. 7, NO. 11, November 1995. This publication addresses the problem of high crosstalk or low contrast of the output ports (i.e., low extinction) in digital electro-optical switches. Amongst other things, the switches are said to generate radiation modes (leaking into the cladding) which, when recaptured by the output ports of the switch, contribute to crosstalk (which is, roughly, composed of two main components: 1) radiation modes and 2) higher-order guided modes in the output that is switched off). To prevent the detrimental recapture of the radiation modes by the output ports, so-called lossy regions are proposed which recapture the radiation modes before they reach the output ports.

Although the lossy regions according to Nolting function satisfactorily for some applications, many state of the art applications require a more effective reduction of stray light. Also, conventional lossy regions suffer from reflection of the stray light towards the waveguide from which it originated. A phase shift of the reflected light with respect to the light that did not leave the waveguide may lead to undesirable interference inside the waveguide. This problem is commensurate with the frequency of the light.

It is an object of the present invention to solve these problems. This object is achieved by the optical waveguide structure described in the first paragraph, wherein the side of the capture region next to or nearest the waveguide channel comprises one or more (preferably protruding or notched) facets for coupling the stray light into the said region.

By using the facet or facets, the angle of incidence (defined as the angle between the incident light and the normal of the interface of the capture region and the cladding) becomes smaller. As a result, the stray light is very effectively coupled into the region, which acts as an antenna, and reflection is (completely) avoided.

It is preferred that (during operation) the angle of incidence of most of the stray light is smaller than 5° or even smaller than 1°. Within this range the effect of the present invention is most prominent. In an embodiment of the present invention, the plane through the facet runs substantially perpendicular to the waveguide channel. Preferably the angle between the said plane and the waveguide channel is within the range from 80 to 100 degrees.

It is also preferred that the capture region comprises a (very) large number of facets in order to optimise the capture of stray light at as many points along the capture region as possible. An advantageous manner of providing a (very) large number of facets is by shaping the appropriate sides of the capture region as a saw tooth (in top view).

Although the invention can be used with advantage in any optical planar waveguide structure to capture stray light, it will be clear from the above explanations that the invention is especially useful in structures comprising N x M optical switches, with N and M being integers greater than or equal to 1, since switches always suffer from crosstalk. The effect of the invention is all the more noticable in (cascaded) switches wherein N and/or M is large (e.g. ≥ 4).

In order to avoid the captured stray light leaking from the capture region, it is preferred that this waveguide is made of an absorbing material or an absorbing material is provided underneath or on top of the said capture region. Any material that absorbs and dissipates light in the optical frequencies used in the structure in question will do. Examples of suitable materials are metals such as titanium, silver, gold, or nickel or non-transparent dielectric polymers containing a dye.

If no means for absorbing the captured light are provided, the capture region should, e.g., comprise an output port or exit for the said light. This output port or exit can, for instance, be positioned next to the regular outputs of the waveguide structure. It is also possible to guide the captured light out of the plane of the region, e.g., into the substrate underneath it by creating contact between the substrate and the material constituting the capture region.

The processing of the waveguide structure is simplified considerably if the waveguide channel and the capture region are made of the same material. However, structures comprising capture regions of a different material (e.g., a material having a higher refractive index) are certainly not excluded.

The optical planar waveguide structure according to the invention can be manufactured in various (known) manners. For example, it is possible to introduce a pattern of waveguide channels and capture regions by removing portions of a slab waveguide, e.g., by means of wet-chemical or dry etching techniques (reactive ion etching, laser ablation), and to optionally fill the gaps formed with a material having a lower index of refraction. Or, e.g., photosensitive material that can be developed after irradiation may be used. In the case of a negative photoresist, the photosensitive material is resistent to the developer after irradiation, and the portions of the material that were not subjected to irradiation can be removed. It is also possible to use a positive photoresist, and to define the channels by means of an irradiation mask covering the waveguide portions that will form the channels. The irradiated material is then removed using developer, after which a material of lower refractive index is applied.

Another method involves the use of a core material that allows defining a waveguide pattern without material having to be removed. Materials of this nature exist, e.g., those that will undergo chemical or physical conversion into a material having a different refractive index when subjected to heat, light, or UV radiation. In the cases where this conversion results in an increase in the refractive index, the treated material will be employed as core material for the waveguide channels. This can be carried through by employing a mask in which the openings are identical with the desired waveguide pattern. In the case of the treatment leading to a decrease of the refractive index, the treated material is suitable as a cladding material. In that case a mask as mentioned above is used, i.e., one that covers the desired waveguide channels. A particular, and preferred, embodiment of this type of core material is formed by polymers that can be bleached, i.e., of which the refractive index is lowered by irradiation with visible light or UV, without the physical and mechanical properties being substantially affected. To this end it is preferred to provide the slab waveguide with a mask that covers the desired pattern of waveguide channels, and to lower the refractive index of the surrounding material by means of (usually blue) light or UV radiation. Bleachable polymers have been described in EP 358 476.
At any rate, for the present invention it is preferred to use a method for making an optical planar waveguide structure comprising the steps of defining at least one waveguide channel and at least one capture region in a core layer, with the definition of the waveguide channel and the capture region being obtained through the use of a mask, preferably a (vapour) deposited mask, of an absorbing material, and with the mask for the definition of the capture region remaining in the waveguide structure. The remainder of the mask will function as the earlier-described absorber. With this preferred method no additional process steps are required for providing the absorbing material, one simply leaves part of the mask behind in the waveguide structure.

In the said method it is preferred to deposit a lift-off resist (which enables very selective removal of those parts of the mask that have served their purpose) on the core layer (i.e., the layer in which the waveguide channel(s) and the capture region(s) are to be defined) and, prior to deposition of the mask, to remove the lift-off resist from the places where the capture regions are to be defined, thus ensuring 1) that during the lift-off process the mask remains on top of the capture regions and 2) optimal contact between the capture region and the material of the mask which, in the end product, serves as an absorber.

Of course, the invention is not restricted to thermo-optical switches. Other possibilities are, amongst others, an electro-optical switch employing a non-linear optical material or passive structures like WDM-devices.

Optically non-linear or NLO materials are known. In such materials non-linear polarisation occurs under the influence of an external field of force (such as an electric field). Alternatively, NLO effects can be generated opto-optically or acousto-optically. In order to render polymeric NLO materials NLO-active (obtain the desired NLO effect macroscopically), the groups present in such a material, usually hyperpolarisable sidegroups, first have to be aligned (poled). Such alignment is commonly effected by exposing the polymeric material to electric (dc) voltage, the so-called poling field, with such heating as will render the polymeric chains sufficiently mobile for orientation. NLO polymers are described in, int. al., EP 350 112, EP 350 113, EP 358 476, EP 445 864, EP 378 185, and EP 359 648.

Polymeric waveguide structures are preferred. Making a polymeric optical waveguide structure according to the invention will generally involve applying a solution of the polymer used as the lower cladding to a substrate, e.g., by means of spincoating, followed by evaporating the solvent. Subsequently, the core layer, and the upper cladding layer, can be applied in the same manner. On top of the upper cladding the heating element or electrodes will be placed, e.g., by means of sputtering, chemical vapour deposition, or evaporation and standard lithographic techniques. For fixation and finishing a coating layer may be applied on top of the entire structure, so as to allow better handling of the device. Alternatively, instead of a coating layer a glue layer may be used for fixation, after which the total structure can be finished by placing an Si- or glass superstrate on it.

Suitable substrates for the structures of the present invention are, int. al., silicon wafers, ceramic materials or plastics laminates, such as those based on epoxy resin, which may be reinforced or not. Suitable substrates are known to the skilled man. For thermo-optical switches and the like, substrates are preferred that, by virtue of a high thermal conductivity, can function as a heat sink, as this can speed up the thermo-optical switching process considerably. For, considering that switching to, say, the "on" state can be achieved by heating the waveguide, reaching the "off" state will merely require leaving the waveguide to cool. The preferred substrates in this respect are glass, metal, or ceramics, and particularly silicon.
Within the framework of the present invention the term 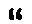 stray light 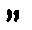 comprises all kinds of optical energy that has leaked from a waveguide. The term thus includes, e.g., 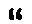 radiation modes 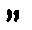 and 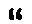 leaking light. 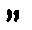 The term 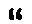 capture region 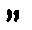 is defined as a region suitable for capturing and preferably also for dissipating stray light. This definition comprises terms such as 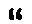 optical sink, 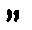 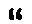 lossy region, 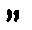 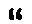 dummy region, 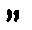 and 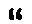 dummy waveguide. 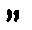

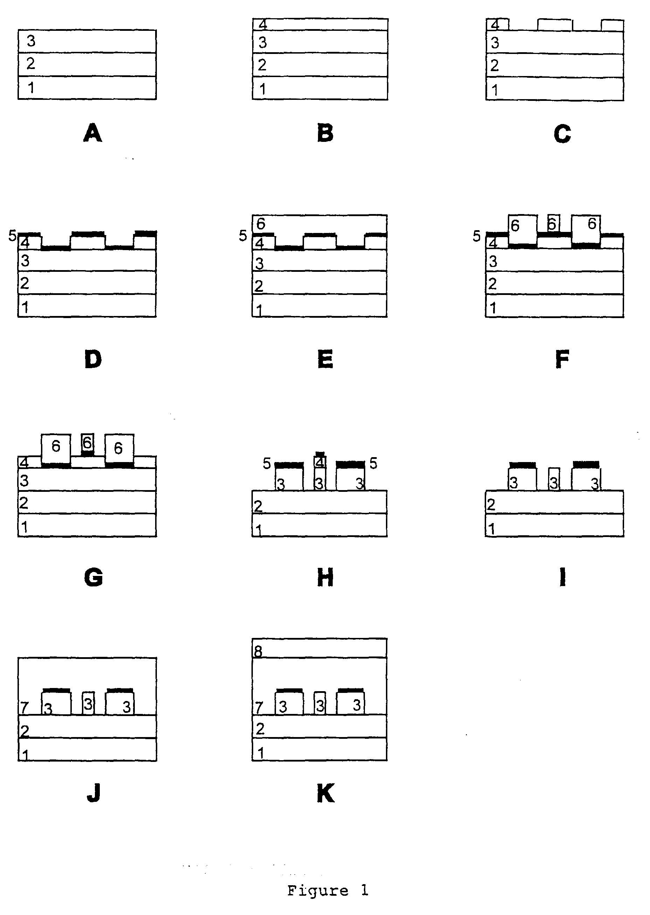

The invention will now be illustrated by way of an unlimitative example illustrated in Figure 1 (for more details on the materials and processes used in the example reference is made to EP 96926957.0 concerning a penta-layered polymeric optical waveguide structure). On a substrate (not shown) are successively deposited (step A in Fig. 1) a low-index bottom cladding or LIBC (1), a matched-index bottom cladding or MIBC (2), and a high index-core layer or HIC (3). Next, a lift-off resist layer (4) is deposited (step B) across the entire surface of the HIC (3) and photo-lithographically removed (step C) from those parts where there will be capture regions and absorbers. A metal layer (5), which functions as a mask and eventually as an absorber material, is deposited (step D) and then covered (step E) with a photoresist (6). This photoresist (6) is photo-lithographically removed from those parts where subsequently the lift-off metal layer (5) and the photoresist (6) plus HIC (3) are removed (steps G and H, respectively). After lifting-off (step I) the part of the metal layer (5) on top of the waveguiding channel (which is still covered by the lift-off (4), whereas the capture regions for capturing stray light are not) a matched-index top cladding or MITC (7) is deposited (step J) on the whole, followed by the deposition (step K) of a low index top cladding or LITC (8).

Thus, an optical planar waveguide structure according to the present invention can be obtained through a minimum number of process steps. More particularly, step C replaces approximately five process step which would otherwise be necessary for providing the absorbers.

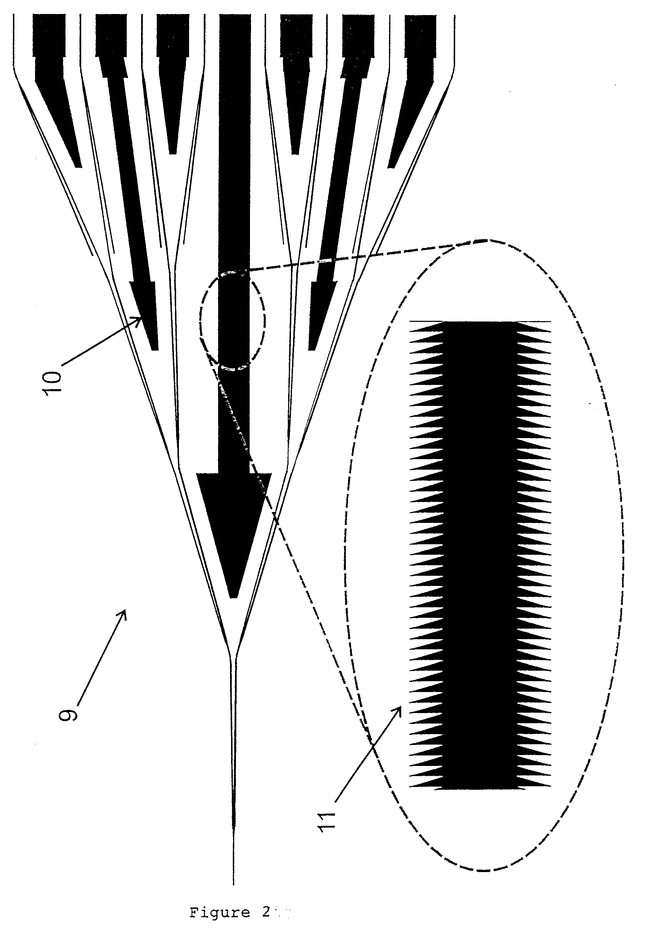

Figure 2 shows, in top view, the lay-out (aspect ratio 1:10) of a preferred optical waveguide structure, viz. a 1x8 thermo optical switch (9) consisting of a cascade of 1x2 switches, obtained with the method described above. In between the branches of each of these 1x2 switches, regions (10) for the capture of stray light are provided. The regions (10) consist of a waveguide covered by a layer of an absorbing material, viz. titanium. The sides of these regions comprise numerous facets, resulting in a saw-tooth (11).

## Claims

1. Optical planar waveguide structure comprising at least one waveguide channel and at least one region for the capture of stray light that has leaked from the waveguide channel, characterised in that the side of the said region next to the waveguide channel comprises one or more facets for coupling the stray light into the region.

2. Optical planar waveguide structure according to claim 1, characterised in that the angle of incidence of most of the stray light is smaller than 5°.

3. Optical planar waveguide structure according to either of the preceding claims, characterised in that, in top view, the sides of the region are saw-toothed.

4. Optical planar waveguide structure according to any one of the preceding claims, characterised in that the structure comprises an N x M optical switch, with N and M being integers greater than or equal to 1.

5. Optical planar waveguide structure according to any one of the preceding claims, characterised in that the waveguide channel and the region are made of the same material.

6. Optical planar waveguide structure according to any one of the preceding claims, characterised in that the region is made of an absorbing material or an absorbing material is provided underneath or on top of the region.

7. Optical planar waveguide structure according to any one of the preceding claims, characterised in that the structure is attached to a substrate and that the region is optically coupled with this substrate.

8. Method for making a planar waveguide structure according to claim 6 comprising the steps of defining at least one waveguide channel and at least one region for the capture of stray light that has leaked from the waveguide channel and providing the region with an absorbing material, characterised in that the definition of the waveguide channel and of the region is obtained through the use of a mask, and the mask for definition of the region remains in the waveguide structure.

9. Method according to claim 8, characterised in that a lift-off resist is deposited on the eventual waveguide channel and that prior to deposition of the mask, the lift-off resist is removed from the places where the regions are to be defined.
